# FASCICULE DE BREVET EUROPEEN

(11) **EP 0 452 461 B1**
(45) Date de publication et mention de la délivrance du brevet: **06.03.1996**
(21) Numéro de dépôt: 90916761.1
(22) Date de dépôt: 31.10.1990
(51) Int. Cl.: G06T 5/50

(54) **PROCEDE DE RECTIFICATION EN TEMPS REEL D'IMAGES DE SATELLITES METEOROLOGIQUES GEOSTATIONNAIRES**
ECHTZEITRICHTVERFAHREN FÜR BILDER VON METEOROLOGISCHEN GEOSTATIONÄREN SATELLITEN
REAL TIME CORRECTION METHOD FOR GEOSTATIONARY METEOROLOGICAL SATELLITE IMAGES

(30) Priorité: 31.10.1989 FR 8914264
(43) Date de publication de la demande: 23.10.1991
(73) Titulaire: AGENCE SPATIALE EUROPEENNE, F-75738 Paris Cedex 15 (FR)
(72) Inventeur: DE WAARD, Johannes, D-6109 Mühltal/Nieder-Beerbach (DE); ADAMSON, Jan, D-6100 Darmstadt (DE); BOS, Albert, Martinus, NL-2700 AB Zoetermeer (NL)
(74) Mandataire: Ores, Irène
(86) Numéro de dépôt international: FR9000787
(87) Numéro de publication internationale: WO9106919

(56) Documents cités:
- ESA Journal 1988, vol. 12, 1988, J. Adamson et al.: "Rectification quality assessment of meteosat images", pages 467-482
- Signal Processing IV: Theories and Applications, Proceedings of EUSPICO-88, Grenoble, 5-8 septembre 1988, vol. III, EURASIP, Elsevier Science Publ. B.V., (NL), G. Zhaozeng et al.: "Geometric distortion correction for satellite panoramic picture", pages 1669-1671
- Spacecraft Flight Dynamics, ESA SP-160, Proceedings of an International Symposium, Darmstadt, 18-22 mai 1981, T. Wolff: "A simple approach to solve the meteosat image deformation problem based on horizon extraction from image data and orbit information", pages 293-298

## Description

La présente invention est relative à un procédé de rectification en temps réel d'images de satellites météorologiques géostationnaires.

Les satellites météorologiques géostationnaires actuellement en orbite (satellites qui tournent à environ 36 000 kms de la Terre au-dessus de l'Equateur et dont la rotation dure 24 heures de sorte qu'ils semblent immobiles dans le ciel) sont constitués par le satellite européen METEOSAT, les satellites américains GOES et le satellite japonais GMS, lequels, pour la prise d'images météorologiques, adoptent tous le même principe de balayage à savoir, construire des lignes de données par rotation du satellite autour de son propre axe longitudinal rendu parallèle à l'axe Nord-Sud (N-S) de la Terre.

Aucun satellite géostationnaire ne peut être considéré comme étant en position fixe par rapport à la Terre : en fait l'orbite, l'orientation (attitude), la vitesse de rotation et le début du balayage s'écartent dans le temps par rapport aux valeurs idéales. Ceci donne des images qui sont déformées par rapport à une image de référence, que l'on suppose prise dans des conditions nominales (à savoir, absolument stables).

Cette situation exige que la déformation des images soit déterminée avec une haute précision et que les données relatives aux images transmises par le satellite et reçues à partir de celui-ci soient corrigées avant utilisation.

Les satellites évoqués plus haut peuvent effectuer une telle correction seulement après qu'une image complète de la Terre ait été reçue. En particulier, pour un satellite tel que METEOSAT, ceci entraîne un retard qui peut aller jusqu'à 40 mn pour la partie de l'image correspondant à l'hémisphère Sud et jusqu'à 20 mn pour l'Europe, avant que l'image corrigée puisse être diffusée aux utilisateurs. Bien que de tels retards soient, en principe, acceptables pour les météorologistes utilisant les images pour les prévisions météorologiques classiques sur des périodes allant jusqu'à une semaine, ils ne sont pas du tout acceptables pour la description détaillée du temps atmosphérique conjointement avec les prévisions météorologiques obtenues par extrapolation avec anticipation pouvant aller jusqu'à 2 heures (dite "nowcasting" suivant la terminologie anglo-saxonne, cf. la définition citée par K.A. BROWNING dans son introduction au "Proceedings of the second international symposium on nowcasting, edt. B. BATTRICK and E. ROLFE, Norrkoeping, Sweden, 3-7 September, 1984).

L'état de la technique le plus proche est précisément défini par le satellite européen METEOSAT qui est un satellite stabilisé par rotation autour de son axe et qui prend une image de la Terre chaque demi-heure. Un tel intervalle d'une demi-heure entre les images reçues est dénommé "créneau". Quatre images sont prises simultanément, une dans l'infrarouge, deux dans le spectre visible et une dans la bande de vapeur d'eau. On fait balayer le télescope qui équipe le satellite de 18° dans la direction S-N, ce qui donne un balayage complet de la Terre de 2500 lignes en 25 mn. Dans chacune de ces 2500 lignes, constituant l'image infrarouge thermique ou de vapeur d'eau, se trouvent 2500 éléments (ou points) d'images ou pels ("pixels" suivant la terminologie anglo-saxonne). Toutefois, un seul canal visible a 2500 lignes de 5000 pixels, et, étant donné que deux canaux visibles agissent simultanément chacun regardant des lignes d'images alternées, c'est un total de 5000 lignes de données correspondant à la bande visible qui sont disponibles, c'est-à-dire 5000 x 5000 pixels pour l'image visible.

Les données d'images reçues par la station d'acquisition de données, de télécommande et de poursuite (DATTS), sont envoyées au système de calcul terrestre METEOSAT (MGCS) situé au Centre d'Opérations de l'AGENCE SPATIALE EUROPEENNE à DARMSTADT (ESOC).

Le satellite européen METEOSAT, en service depuis le 9 décembre 1977 se trouve sur le méridien 0 (GREENWICH), au-dessus de l'Equateur. Son système de prise d'images voit toujours la même portion, environ 1/3 de la surface de la Terre et l'image brute provient d'un radiomètre qui "tâte" la Terre en 25 mn. Un système de miroirs discrimine les rayonnements en trois bandes spectrales et les conduit à trois détecteurs : l'un est sensible à la lumière visible (500 à 1000 nm), l'autre au rayonnement infrarouge à 10500/12500 nm (rayonnement de chaleur), et le troisième, pour l'infrarouge aussi, mais de 5700 à 7100 nm (vapeur d'eau). Le signal de chaque détecteur est amplifié, filtré, changé d'analogique en digital et ensuite mémorisé (la Terre vue de 36 000 kms tient dans un angle de 18°).

La principale station terrestre du système METEOSAT est située au sud-est de Francfort, en Allemagne de l'Ouest. L'image brute reçue est transmise à partir de là par câble au Centre ESOC. Les images sont alors introduites dans un système de traitement où elles sont corrigées géométriquement, calibrées et évaluées.

Les images dans le spectre visible consistent en 5000 lignes de 5000 points par ligne : c'est-à-dire, 25 millions de points d'image. Chaque point d'image peut prendre 64 valeurs de brillance possible. Les images infrarouges sont formées de 2500 lignes de 2500 points, dans lesquelles les points sont codés en 256 valeurs. Les images dans la bande de vapeur d'eau consistent en 6,25 millions de points, comme pour les images dans la bande infrarouge, les points étant eux aussi codés en 256 valeurs.

Les points mentionnés représentent une résolution de 2,5 km en lumière visible et 5 km dans l'infrarouge, les valeurs optimales étant validées pour la surface directement sous le satellite (Golf de Guinée).

Les images brutes sont traitées et évaluées de plusieurs façons au Centre de DARMSTADT, afin de les rendre disponibles pour les recherches météorologiques. METEOSAT est alors utilisé comme émetteur-relais pour la distribution des images sélectionnées à l'intention des centres Météo, des Instituts de recherche et d'autres parties intéressées. Ces images traitées sont transmises au satellite à partir de la station terrestre de DARMSTADT et retransmises par le satellite aux fréquences appropriées.

D'autres renseignements très utiles concernant METEOSAT peuvent être trouvés dans la publication "Introduction to the METEOSAT operational system" ESA-BR32, September 1987, ainsi que dans l'article de WOLFF "An image geometry model for METEOSAT, Int. J. Remote sensing, 1985, vol. 6, n° 10, pages 1599 à 1606.

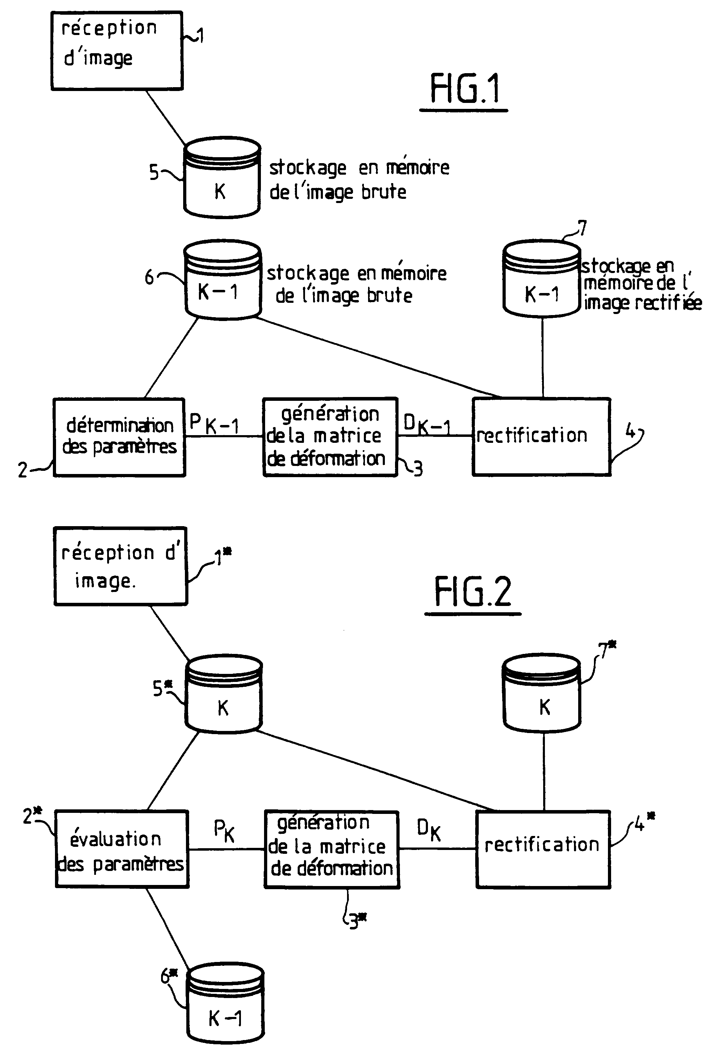

Actuellement, les données d'images sont démultiplexées par un ordinateur dit intermédiaire (ce qui équivaut à l'expression anglo-saxonne "Front end Computer") et stockées sous forme d'images brutes, dans une mémoire à disque, puis traitées successivement suivant trois étapes principales, qui sont illustrées à la figure 1 accompagnant la présente description, à savoir :
1) détermination des paramètres géométriques du système d'images ;
2) calcul de la matrice de déformation (à savoir, de l'écart de l'image réelle par rapport à l'image de référence) ;
3) rectification des images brutes évoquées plus haut suivant les indications de la matrice de déformation précitée.

Ces trois étapes correspondent à ce que la littérature scientifique désigne sous l'expression "traitement d'images géométriques", qui vise à reconstruire géométriquement l'image nominale.

L'image rectifiée est distribuée par le satellite METEOSAT à un grand nombre d'usagers comprenant les centres nationaux de prévision du temps ainsi que les amateurs.

Le traitement informatique de l'image brute permet de déterminer les paramètres qui sont nécessaires pour connaître la déformation géométrique de l'image brute correspondant au créneau k-1. Cet ensemble de paramètres, désigné sous la référence Pₖ₋₁, est utilisé pour calculer la déformation géométrique sur un certain nombre de points de grille (26 x 26 dans l'application visée dans le cadre de la présente invention). Les variables à considérer sont les suivantes :
i) la vitesse de rotation du satellite autour de son axe longitudinal (dit axe de roulis) ;
ii) l'orbite et l'orientation du satellite ;
iii) les paramètres du satellite qui sont en relation avec le pointage (à savoir, le repérage dans l'espace) du détecteur ;
iv) le centrage Est-Ouest (E-O) du disque correspondant à la Terre dans l'image.

En ce qui concerne la vitesse de rotation propre du satellite, celle-ci est mesurée par le système de minutage dont est équipé le satellite.

L'orbite et l'orientation du satellite sont déterminés selon un traitement en différé (à savoir, en mode autonome) à partir des données de télémesure de METEOSAT et prédites pour les jours suivants. Cette information orbitale est utilisée sans modification. L'orientation basée sur la télémesure est utilisée comme valeur initiale, alors que les horizons infrarouges Sud et Nord sont utilisés pour améliorer la précision de l'orientation. Cette amélioration est nécessaire parce que METEOSAT n'est pas équipé, -pour des raisons économiques-, d'un système de mesure d'orientation sophistiqué comme c'est le cas d'un traceur de cartes stellaires, en sorte que l'orientation mesurée ne présente pas la précision exigée pour le traitement d'images géométriques.

Les horizons Est et Ouest dans l'image brute sont utilisés pour améliorer la position Sud-Nord de l'image.

L'ensemble de paramètres ainsi affinés Pₖ₋₁ est utilisé pour déterminer la déformation de l'image brute sur les points de grille évoqués plus haut. La déformation sur chacun de ces points est un vecteur représentant la déformation de l'image en lignes et pixels. L'ensemble des valeurs correspondant à ces déformations est mis sous forme de matrice de déformation Dₖ₋₁. Une méthode précise de détermination de cette matrice est décrite par WOLFF dans l'article "A simple approach to solve the METEOSAT image deformation problem based in horizon extraction from image data and orbit information", Proc. Int. Symp. Spacecraft Flight Dynamics, DARMSTADT, FRG, 18-22 May, 1981, ESA SP-160,Aug. 1981, ainsi que dans l'article -également de WOLFF- déjà évoqué plus haut. Or, la matrice de déformation constitue l'entrée du programme de rectification qui effectue l'interpolation de la déformation sur la base des points de grille précités, de manière à déterminer la déformation pour chacun des pixels dans l'image rectifiée, et utilise cette déformation pour corriger le pixel correspondant à l'emplacement dans l'image brute.

Le concept, d'ailleurs simple, d'un satellite stabilisé par rotation autour de son axe longitudinal, conjointement avec l'utilisation des données d'images elles-mêmes pour améliorer la précision des paramètres géométriques, fournit une erreur RMS (moyenne quadratique) de moins de 2 pixels. Cette erreur RMS a été déterminée en mettant certains points de contrôle en corrélation avec des données de référence (cf MUNDOCART Cartographical Database, Petroconsultants -CES- Ltd. CAMBRIDGE, UK). La méthode de mesure a été décrite en détail par ADAMSON, J., KERR, G.W., JACOBS, G.H.P. dans l'article "Rectification of quality assessment of Meteosat images", ESA Journal, vol. 12, pages 467 à 482, 1988).

Comme conséquence de cette méthode existante, le traitement d'images géométriques peut être mis en route seulement après que le disque complet de la Terre ait été reçu (à cet effet, sont utilisés tous les horizons infrarouges). L'image du créneau k-1 est traitée pendant la réception de l'image du créneau k, comme illustré à la figure 1. Le traitement d'images lui-même nécessite environ 6 à 8 mn. Ensuite, les données sont distribuées aux usagers de METEOSAT ce qui implique que les usagers dans l'hémisphère Sud doivent attendre approximativement 40 mn avant de recevoir les images qui couvrent leur zone, alors que les usagers européens doivent attendre jusqu'à 20 mn avant de recevoir l'image correspondante.

La présente invention s'est donc donné pour but de pourvoir à un satellite météorologique géostationnaire qui reponde mieux à la nécessité de la pratique que les satellites du même type et visant au même but antérieurement connus, notamment en ce qu'il effectue la correction de la déformation des images en temps réel, et ce sans le besoin de détecteur d'attitude additionnel sophistiqué à bord du satellite.

La présente invention a pour objet un procédé de rectification en temps réel de données d'images détectées à distance par un instrument de mesure de radiations tel qu'utilisé à bord d'un satellite geostationnaire stabilisé en rotation comme revendiqué dans la revendication 1.

Dans un mode d'exécution préféré du procédé l'instrument de mesure de radiations est constitué par un radiomètre, du type de ceux dont sont équipés les satellites européens METEOSAT.

L'invention sera bien comprise à l'aide de la description qui va suivre faite en référence à la figure 2 du dessin annexé qui est un schéma en bloc-diagramme illustrant de façon schématique le procédé selon l'invention et qui montre de façon claire la différence qui existe par rapport au procédé de l'Art antérieur illustré lui aussi schématiquement à la figure 1.

La figure 2 illustre graphiquement la circulation de données impliquées dans la rectification en temps réel de données d'images, objet de la présente invention. La correspondance entre les figures 1 et 2 est très claire et ne requiert pas de commentaires particuliers : en fait, les blocs 1^{*}, 2^{*}, 3^{*} et 4^{*} de la figure 2 correspondent aux blocs 1, 2, 3 et 4 de la figure 1, alors que les cylindres 5^{*} à 7^{*} et 5 à 7 correspondent à des mémoires à disques.

Etant donné que la plupart des perturbations influençant les paramètres du satellite sont de nature périodique, il est logique de s'attendre à que la matrice de déformation correspondant au créneau réel soit basée sur une analyse statistique de l'information établie pour les créneaux précédents. Toutefois, la Demanderesse a déjà fait l'expérience du fait qu'un tel système ne fournit pas la précision requise et c'est pourquoi elle a développé le procédé perfectionné de la présente Demande, décrit ci-après en référence à un balayage de la terre du Sud vers le Nord et qui toutefois, bien entendu, est aussi applicable aux instruments de mesure de radiations pour satellites balayant la terre du Nord vers le Sud.

La rectification en temps réel, selon l'invention, des images de satellites météorologiques géostationnaires utilise un mode unique de combinaison des paramètres qui peuvent être évalués, ce mode de combinaison étant basé sur l'analyse statistique des paramètres établis pour les créneaux précédents, et sur les paramètres qui peuvent être déterminés à partir des données en entrée, cette combinaison seulement, de paramètres évalués (par extrapolation) et mesurés, fournissant la précision exigée.

Le procédé d'évaluation en temps réel de l'ensemble des paramètres Pₖ est effectué pour l'image k directement au début du créneau k. A ce moment, les horizons Est, Ouest ou Nord, tels qu'ils sont utilisés dans le procédé de rectification selon l'invention, ne sont pas encore disponibles.

Toutefois, compte tenu de l'observation faite que la diffusion des images rectifiées n'est pas utile avant de disposer de quelques images contenant au moins l'horizon Sud, qui peut ainsi être utilisé pour améliorer la précision des paramètres, la position des lignes de l'horizon Sud peut être mesurée, -comme d'ailleurs pour l'horizon Est-Ouest-, avant le début du procédé de rectification. En plus, on a l'avantage de pouvoir déterminer le décalage de la vitesse de rotation du satellite autour de son axe à partir d'une information de minutage dans les premières lignes d'images.

Cela étant, les seuls paramètres qui ne sont pas connus à ce moment dans le temps sont l'orientation affinée et les paramètres du satellite de même que le positionnement de l'horizon Nord à l'intérieur de l'image.

Cependant, l'orientation peut être affinée uniquement en utilisant l'horizon Sud. De plus, en admettant l'hypothèse que les autres paramètres de pointage restent constants sur un créneau, on peut adopter pour eux les mêmes valeurs que celles correspondant à l'image précédente. Au demeurant, l'horizon Nord peut être obtenu à partir de la position du satellite, du rayon polaire de la Terre et des paramètres de pointage, à savoir de repérage du détecteur du satellite.

Il est possible de tenir compte des variations de la vitesse de rotation du satellite autour de son axe à l'aide d'une équation différentielle du premier ordre qui fait partie d'un algorithme approprié connu sous le nom de KALMAN FILTER (cf GELB, A., "Applied optimal estimation", MIT press,1974).

Un prototype du système de création de la matrice de déformation et d'évaluation des paramètres a été développé par la Demanderesse et testé pendant plusieurs mois, ce qui a permis d'en établir une fois pour toutes la précision et la qualité.

Les tests ont été effectués en tenant compte, comme élément de comparaison, de METEOSAT.

Le procédé, objet de la présente invention, peut être appliqué aux prévisions météorologiques en temps réel comme requis par le contrôle des trafics aériens et routiers.

## Revendications

1. Procédé de rectification d'images acquises par un détecteur d'un satellite géostationnaire stabilisé en rotation, par balayage de la terre avec acquisition des lignes de l'image par la rotation du satellite autour d'un axe, l'image acquise étant déformée par les variations dans le temps de l'orbite, de l'attitude et de la vitesse de rotation, la rectification comportant les étapes consistant à :
a) déterminer les paramètres de correction à partir de l'image acquise ;
b) élaborer une matrice de déformation de l'image en utilisant les paramètres déterminés à l'étape a) ;
c) rectifier l'image en lui appliquant la matrice de déformation élaborée à l'étape b),
caractérisé en ce que l'étape a) comporte les étapes consistant à :
d) fixer comme valeur de départ des paramètres de rectification la moyenne statistique des paramètres des images précédentes ;
e) déterminer la position précise dans l'image de l'horizon Sud dans le cas d'un balayage Sud-Nord ou de l'horizon Nord dans le cas d'un balayage Nord-Sud à partir des premières lignes de l'image à rectifier ;
f) déterminer la vitesse de rotation du satellite durant l'acquisition des premières lignes de l'image à rectifier et prédire des variations de la vitesse de rotation pour le reste de l'image à l'aide d'une équation différentielle du premier ordre dans l'algorithme de "KALMAN FILTER",
g) calculer la position dans l'image de l'autre horizon Nord ou Sud et du centre de l'image à partir de l'horizon Sud ou Nord déterminé l'étape e) ;
et en ce que l'étape c) est effectuée en temps réel au fur et à mesure de la réception de l'image.

2. Procédé selon la revendication 1, caractérisé en ce que ledit procédé est un procédé de rectification d'images de satellites météorologiques comportant un radiomètre assurant l'acquisition des images à rectifier.

## Patentansprüche

1. Verfahren zum Korrigieren von Bildern, die von einem Detektor eines geostationären, rotationsstabilisierten Satelliten aufgenommen wurden, durch Abtasten der Erde und zeilenweises Aufnehmen des Bildes unter Drehung des Satelliten um eine Achse, wobei das aufgenommene Bild durch zeitliche Variationen der Umlaufbahn, der Position und der Drehgeschwindigkeit entstehen und das Verfahren zum Korrigieren die folgenden Schritte aufweist:
a) Bestimmen der Korrekturparameter aus dem aufgenommenen Bild,
b) Erstellen einer Deformationsmatrix des Bildes unter Heranziehung der in Schritt a) bestimmten Paramteter,
c) Korrigieren des Bildes durch Anwenden der in Schritt b) erstellten Deformationsmatrix,
d) Festlegen der Anfangswerte für die Korrekturparameter durch das statistische Mittel der Parameter der vorhergehenden Bilder,
e) präzise Bestimmung der Position des südlichen Horizontes des Bildes für den Fall einer Süd-Nord-Abtastung oder des nördlichen Horizontes für den Fall einer Nord-Süd-Abtastung aus den ersten Zeilen des zu korrigierenden Bildes,
f) Bestimmen der Rotationsgeschwindigkeit des Satelliten während der Aufnahme der ersten Zeilen des zu korigierenden Bildes und Vorherbestimmen der Geschwindigkeitsvariationen für das restliche Bild mit Hilfe einer Differentialgleichung erster Ordnung gemäß dem "KALMAN FILTER"-Algorithmus,
g) Berechnen der Positon des anderen Horizontes des Bildes, nämlich des nördlichen oder des südlichen, und der Bildmitte aus dem in Schritt e) bestimmten südlichen oder nördlichen Horizontes, wobei
Schritt c) nach und nach bei dem Empfang des Bildes in Echtzeit ausgeführt wird.

2. Verfahren nach Anspruch 1, **dadurch gekennzeichnet**, daß das Verfahren ein Verfahren zum Korrigieren von Bildern meteorologischer Satelliten ist, die ein Radiometer zum Aufnehmen der zu korrigierenden Bilder aufweisen.

## Claims

1. Process for the rectification of images acquired by a detector of a spin-stabilized geostationary satellite, by scanning the Earth with image line acquisition by spinning the satellite about its axis, the acquired image being distorted by variations in orbital period, in attitude and in spin speed, and the rectification comprising the following steps:
a) determination ofthe correction parameters from the image acquired;
b) construction of an image deformation matrix using the parameters determined in step a);
c) rectification of the image by applying to it the deformation matrix constructed in step b);
characterized in that step a) comprises the following steps:
d) setting as the initial values of the rectification parameters, the statistical mean of the parameters of the preceding images;
e) determination of the precise position in the image of the South horizon in case of a South-North scan, or of the North horizon in case of a North-South scan, from the first image lines to be rectified;
f) determination of the spin speed of the satellite during the acquisition of the first image lines to be rectified, and prediction of the variations in spin speed for the rest of the image, by means of a first order differential equation in the "KALMAN FILTER" algorithm;
g) calculation of the position of the image of the other North or South horizon and of the centre of the image from the South or North horizon determined in step e);
and further characterized in that step c) is carried out in real time and corresponding to the reception of the image.

2. The process of claim 1, characterized in that said process is a process for the rectification of images from meteorological satellites comprising a radiometer for acquiring the images to be rectified.
